Europäisches Patentamt

European Patent Office

Office européen des brevets

(11) Publication number: **0 122 731**
**A1**

## (12) EUROPEAN PATENT APPLICATION

(21) Application number: **84301853.2**

(22) Date of filing: **19.03.84**

(51) Int. Cl.³: **B 64 C 25/60**

(30) Priority: **08.04.83 GB 8309589**

(43) Date of publication of application:
**24.10.84 Bulletin 84/43**

(84) Designated Contracting States:
**DE FR GB IT**

(71) Applicant: **WESTLAND plc**

**Yeovil Somerset(GB)**

(72) Inventor: **Deady, Martin Albert**
**Westmoor View Owl Street East Lambrook**
**South Petherton Somerset(GB)**

(74) Representative: **Jack, Bruce James et al,**
**FORRESTER & BOEHMERT Widenmayerstrasse 4/l**
**D-8000 Munchen 22(DE)**

(54) Suspension damper for helicopter undercarriage and helicopter incorporating same.

(57) A suspension damper (10) particularly for use in a helicopter undercarriage comprises a hollow piston (11) having a piston head axially slidable in a cylinder (12) filled with hydraulic fluid, a compression fluid passageway (19) in the piston head through which hydraulic fluid is metered during compression of the damper, and an extension fluid passageway (21) through which hydraulic fluid flows during extension of the damper. A selectively operable valve means (23) is adapted to close the extension fluid passageway (21) to prevent extension of the damper whilst permitting further extension thereof.

When used on a helicopter undercarriage, the damper of this invention reduces or eliminates instability of the helicopter when at rest on an unstable platform.

EP 0 122 731 A1

./...

Fig.1.

Title:   Suspension damper for helicopter undercarriage
and helicopter incorporating same


This invention relates to a suspension damper for a helicopter undercarriage and to a helicopter incorporating same.

Suspension dampers are known which comprise a hollow piston axially slidable in a cylinder filled with hydraulic fluid and in which damping is achieved by metering the fluid through a compression fluid passageway through which the fluid is caused to flow by movement of the piston during compression of the damper. An extension fluid passageway provides for fluid flow during extension of the damper, and may include means for metering this flow to restrict recoil movement. The fluid passageways are typically constituted by a valve assembly including a plurality of graded orifices and associated valves automatically operable depending on the direction of fluid flow to ensure appropriate damping during the compression and extension strokes, respectively.

It is also known in such a suspension damper to provide a floating piston within the hollow piston to divide its interior into a first chamber filled with hydraulic fluid and a second chamber filled with a compressible medium, preferably pressurised air. This floating piston arrangement provides progressive increase of the force due to the compressible medium as the piston moves towards the end of its compression stroke, and also provides for extension of the damper when off-loaded by the expansion of the compressible medium acting on the floating piston to force hydraulic fluid back through the orifice and valve assembly.

Such dampers have become known in the art as oleo pneumatic dampers or, simply, oleos, and are widely used in helicopter undercarriages.

In operation of a helicopter from an unstable platform, the normal response, by compression and extension, of existing suspension dampers can result in an undesirable instability of the helicopter, and it is an object of this invention to provide a suspension damper with selectively operable control means to reduce or eliminate such instability.

Accordingly, in one aspect the invention provides a suspension damper for a helicopter undercarriage, the damper comprising a hollow piston having a piston head axially slidable in a cylinder filled with hydraulic fluid, a compression fluid passageway in the piston head through which hydraulic fluid is metered during compression of the damper and an extension fluid passageway through which hydraulic fluid flows during extension of the damper, characterised by selectively operable valve means adapted to close the extension fluid passageway to prevent extension of the damper whilst permitting further compression thereof.

In another aspect the invention provides a suspension damper for a helicopter undercarriage comprising a hollow piston having a piston head axially slidable in a cylinder filled with hydraulic fluid and serving to sub-divide the interior of the cylinder into a first chamber at one side of the piston and a second chamber at the other side, a compression fluid passageway comprising a metering orifice and non-return valve adapted to permit fluid to flow from the first chamber to the second chamber during compression of the damper and to prevent fluid flow in the reverse direction, and an extension fluid passageway interconnecting the chambers and adapted to permit fluid flow from the second chamber to the first chamber during extension of the damper, characterised by selectively operable valve means adapted to close the extension fluid passageway to prevent extension of the damper whilst permitting further compression thereof.

In one form of the invention, the extension fluid passageway is located in the wall of the cylinder. However, in another form, the extension fluid passageway is located in a housing in a reduced diameter portion of the piston above the piston head, said reduced diameter portion extending through the cylinder to protrude from an upper end thereof. The valve means may comprise a two-position axially slidable valve in the housing, spring-loaded to a position in which it permits fluid flow through the extension fluid passageway, and cable means attached to the valve and extended through the reduced diameter portion of the piston for connection to operating means located at the protruding end thereof.

The operating means may comprise a manually operated lever or a pivoted lever operatively associated with a piston located in a chamber in a housing at the protruding end of the piston, and means for connecting a pressurised hydraulic supply selectively to opposite sides of the piston in the chamber.

In another aspect the invention provides a helicopter having an undercarriage comprising a plurality of ground engaging wheels attached to a fuselage by suspension dampers each comprising a hollow piston having a piston head axially slidable in a cylinder filled with hydraulic fluid, a compression fluid passageway in the piston head through which hydraulic fluid is metered during compression of the damper as the wheels contact a landing surface, and an extension fluid passageway through which hydraulic fluid flows during extension of the damper as the helicopter lifts from the landing surface, characterised by selectively operable valve means adapted to close the extension fluid passageway when the helicopter is at rest on an unstable platform to reduce instability of the helicopter by preventing extension of the damper whilst permitting further compression thereof.

The invention will now be described by way of example only and with reference to the accompanying drawings in which:

Figure 1 is a longitudinal sectioned view of a suspension damper for a helicopter undercarriage constructed according to one embodiment of the invention;

Figure 2 is a longitudinal sectioned view of a suspension damper according to a further embodiment;

Figure 3 is a fragmentary sectioned view of part of the damper of Figure 2 and illustrating a modification; and

Figure 4 is a front view of a helicopter having an undercarriage utilising suspension dampers according to the invention.

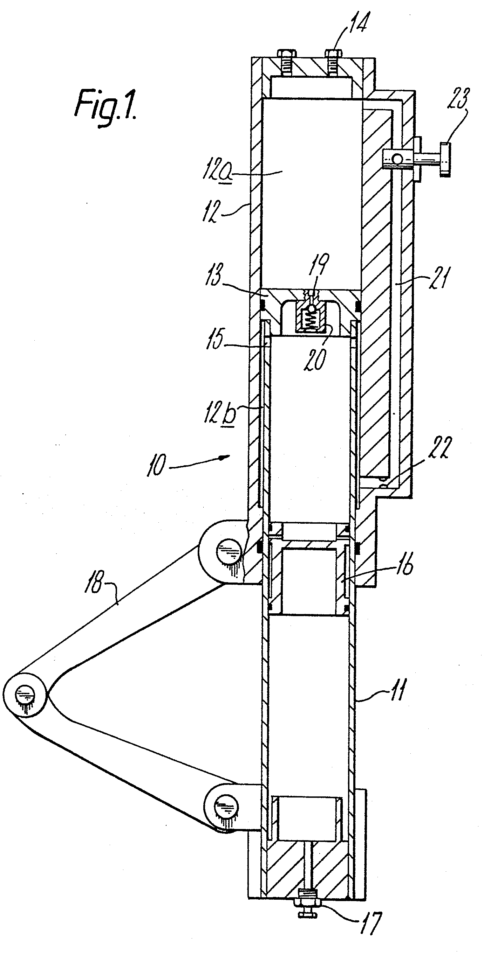

Referring to Figure 1, a suspension damper generally indicated at 10 includes a hollow piston 11 axially slidable in a cylinder 12.

A piston head 13 is formed at the upper end of the piston 11 and serves to sub-divide the interior of the cylinder 12 into a first chamber 12a above the piston head 13 and a second annular chamber 12b below the piston head 13. The chambers 12a and 12b are filled with hydraulic fluid through a charging valve 14, and apertures 15 through the wall of the hollow piston 11 provide fluid communication between the interior of the piston 11 and the annular chamber 12b.

A compression fluid passageway consisting of a metering orifice 19 is provided in the piston head 13 and is associated with a non-return valve 20 adapted to permit a flow of hydraulic fluid from chamber 12a into the interior of the piston 11 and thence, through apertures 15 into chamber 12b, but to prevent flow in the reverse direction.

A floating piston 16 is located inside the piston 11 for sliding movement along the length thereof. The portion of the piston 11 above the floating piston 16 is filled with hydraulic fluid as hereinbefore explained, and the portion below the floating piston 16 is filled with pressurised air through a charging valve 17.

Piston 11 and cylinder 12 are interconnected by a mechanical scissors linkage 18, which during operation, prevents relative rotation of the parts.

A suspension damper as so far described and provided with an arrangement to permit controlled fluid flow from the chamber 12b to the chamber 12a upon extension of the damper is known in the art and constitutes a device that is often referred to as an oleo pneumatic device or simply an oleo. Such oleos are widely used in helicopter undercarriages.

The improvement that is the subject of the present invention consists of the provision of a selectively controllable extension fluid passageway 21 interconnecting chambers 12a and 12b to provide for the fluid flow during extension of the damper.

In the embodiment of Figure 1, the passageway 21 is formed in the wall of cylinder 12. A restrictor 22 is formed in the passageway 21, and a selectively operable valve 23 is rotatable between a position in which it permits hydraulic fluid to flow through the extension fluid passageway 21 into the chamber 12a and a position in which such a flow is prevented.

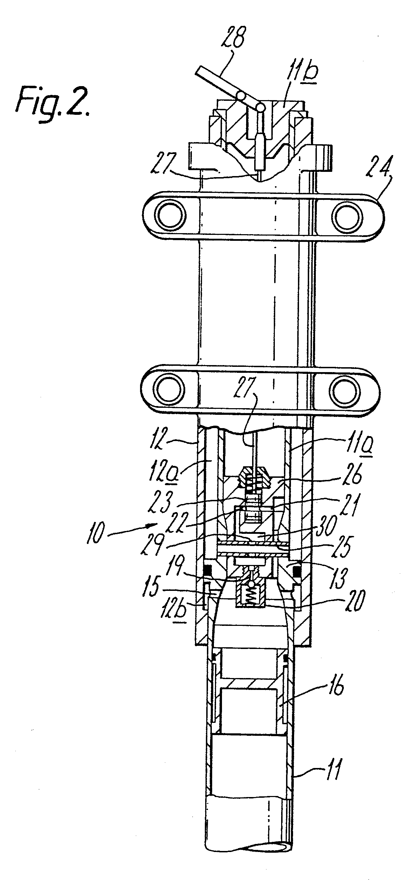

The embodiment of Figure 2 is similar to that hereinbefore described and like reference numerals have been used to indicate similar parts. The following description is limited to the differences.

Mounting brackets 24 are formed integral with the cylinder 12 to facilitate attachment of the suspension damper 10.

The piston 11 includes a reduced diameter hollow portion 11a extended upwardly through the cylinder 12 to terminate at an upper end 11b protruding from the top of the cylinder 12. The chamber 12a in this embodiment is therefore annular in cross sectional-shape.

A tube 25 is located through the portion 11a above the piston head 13 and apertures 29 through the wall of the tube provide a fluid passageway between the chamber 12a and the metering orifice 19 and non-return valve 20 via a chamber 30.

The arrangement of Figure 2, as so far described, supplemented by an arrangement permit controlled fluid flow from chamber 12b to chamber 12a upon extension of the damper is known in the art and forms no part of the present invention.

In the embodiment of Figure 2, the extension fluid passageway 21 extends through the piston head 13 and a housing portion 26 at the lower end of portion 11a which locates the selectively operable valve 23 that consists of a cylindrical valve located axially in the housing 26 across the extension passageway 21 and spring-loaded to the position illustrated in which a reduced diameter portion is aligned with the extension fluid passageway 21 to permit fluid flow. A restrictor 22 is located in the passageway 21.

The passageway 21 communicates with the chamber 30 and thence via apertures 29 and tube 25 with chamber 12a. The valve 23 is connected by a cable 27 extending through the reduced diameter portion 11a for connection at upper end 11b to a pivotally mounted lever 28.

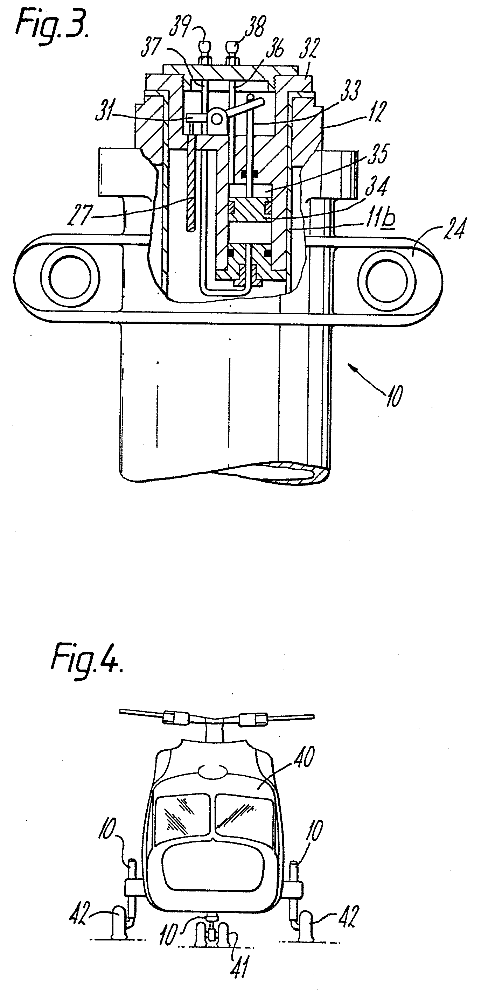

Figure 3 illustrates a modification of Figure 2 in which the upper end of the operating cable 27 is attached to one arm of a lever 31 pivotally attached to a housing 32 supported internally at the upper end 11b of piston 11. The other arm of lever 31 is pivotally attached to one end of a piston rod 33 attached to a piston 34 located in a chamber 35 in the housing 32. The portions of chamber 35 at opposite sides of the piston 34 are connected respectively by pipes 36 and 37 to connections 38 and 39 for selective connection to a supply of pressurised hydraulic fluid (not shown).

Figure 4 illustrates a helicopter 40 having a tricycle undercarriage comprising a pair of nose wheels 41 and a main wheel 42 located at each side of the fuselage. The nose wheels 41 and each of the main wheels 42 are supported at the end of a suspension damper 10 attached to the fuselage 40 and constructed in accordance with any one of the embodiments hereinbefore described.

In normal operation, eg. as the wheels 41 and 42 of the helicopter 40 contact a landing surface during landing, compression of each damper 10 occurs as required to cushion inpacts, causing upward movement of the piston 11 which forces hydraulic fluid from chamber 12a through the metering orifice 19 and non-return valve 20 to provide a damping force. The hydraulic fluid flows through the apertures 15 into the chamber 12b and also acts on the floating piston 16 to progressively compress the air below the piston 16 as the piston head 13 moves towards the end of its stroke in the cylinder 12, thereby to progressively increase the damping force. In the case of dampers constructed as shown in Figures 2 and 3, such upward movement of the piston 11 causes the upper end 11b of the reduced diameter portion 11a to protrude from the upper end of cylinder 12. On the other hand, when the helicopter 40 lifts off from the surface, expansion of the compressed air below the floating piston 16 forces hydraulic fluid from chamber 12b through the extension fluid passageway 21 back into chamber 12a thereby causing extension of the suspension damper 10, the restrictor 22 serving to meter the return flow and prevent undesirable recoil.

In the described embodiments, the restrictor 22 in the extension fluid passageway 21 is designed to provide a greater restriction to fluid flow than that provided by the metering orifice 19, and thereby effectively prevents flow through the passageway 21 during compression of the damper. However in other embodiments, for installations in which the recoil operation is to be less restricted or in installations in which no recoil restrictor is required in the passageway 21, such a flow through the passageway 21 during the compression stroke can be prevented by the incorporation therein of a simple non-return valve.

When a helicopter fitted with a suspension damper according to the present invention is at rest on an unstable platform, actuation of the valve 23 effectively blocks the return fluid flow through the extension fluid passageway 21 thereby preventing extension of the damper whilst permitting further compression which may be caused by movements of the unstable platform. Therefore, cyclical compression and extension of the damper is prevented whilst the helicopter is at rest on an unstable platform thereby effectively reducing or eliminating any consequent instability of the helicopter.

In the embodiment of Figure 1, valve 23 is actuated simply by manual rotation, and in the embodiment of Figure 2 by pivotal movement of the lever 28. The modification of Figure 3 introduces a remote control configuration in that actuation of the valve 23 to close passageway 21 is accomplished by applying hydraulic fluid through connection 38 and pipe 36 to move the piston 34 downwardly in chamber 35 thereby pivoting lever 31 attached to cable 27. Opening of the passageway 21 is of course accomplished by applying hydraulic pressure to connection 39, and it will be apparent that control of the hydraulic supplies to connectors 38, 39 could be at a remote location, for instance in the helicopter cabin.

Whilst several embodiments have been described and illustrated it will be apparent that many modifications can be made without departing from the scope of the invention as defined in the appended Claims. For example, other types of manually operable valve and valve operating means could be used to control the flow of fluid through extension fluid passageway 21 and other forms of remotely controlled devices, for example electro-mechanical device may be used. Other forms of compressible medium, for instance a mechanical spring, can be used instead of pressurised air in the interior of the hollow piston 11 beneath the floating piston 16.

CLAIMS

1. A suspension damper (10) for a helicopter undercarriage comprising a hollow piston (11) having a piston head (13) axially slidable in a cylinder (12) filled with hydraulic fluid, a compression fluid passageway (19) in the piston head through which hydraulic fluid is metered during compression of the damper, and an extension fluid passageway (21) through which hydraulic fluid flows during extension of the damper, characterised by selectively operable valve means (23) adapted to close said extension fluid passageway (21) to prevent extension of the damper whilst permitting further compression thereof.

2. A suspension damper (10) for a helicopter undercarriage comprising a hollow piston (11) having a piston head (13) axially slidable in a cylinder (12) filled with hydraulic fluid and serving to sub-divide the interior of the cylinder into a first chamber (12a) at one side of the piston head and a second chamber (12b) at the other side, a compression fluid passageway comprising a metering orifice (19) and non-return valve (20) adapted to permit fluid to flow from chamber (12a) to chamber (12b) during compression of the damper and to prevent fluid flow in the reverse direction, and an extension fluid passageway (21) interconnecting the chambers and adapted to permit fluid flow from chamber (12b) to chamber (12a) during extension of the damper, characterised by selectively operable valve means (23) adapted to close said extension fluid passageway (21) to prevent extension of the damper whilst permitting further compression thereof.

3. A suspension damper as claimed in Claim 1 or Claim 2, further characterised in that said extension fluid passageway (21) is located in the wall of said cylinder (12).

4.    A suspension damper as claimed in Claim 1 or Claim 2, further characterised in that said extension fluid passageway (21) is located in a housing (26) in a reduced diameter portion (11a) of the piston (11) above the piston head (13), said reduced diameter portion extending through the cylinder (12) to protrude from an upper end thereof.

5.    A suspension damper as claimed in Claim 4, further characterised in that said valve means (23) comprises a two-position axially slidable valve in said housing, spring-loaded to a position which permits a fluid flow through the extension fluid passageway.

6.    A suspension damper as claimed in Claim 5, further characterised by cable means (27) attached to the valve (23) and extending through the reduced diameter portion of the piston for connection to operating means located at the protruding end of the piston.

7.    A suspension damper as claimed in Claim 6, further characterised in that said operating means comprises a manually operable lever (28).

8.    A suspension damper as claimed in Claim 6, further characterised in that said operating means comprises a pivoted lever (31) operatively associated with a piston (34) located in a chamber (35) in a housing (32) at the protruding end of the piston, and means (36, 37, 38, 39) for connecting a pressurised hydraulic supply selectively to the chamber (35) at opposite sides of the piston (34).

9.    A helicopter (40) having an undercarriage comprising a plurality of ground engaging wheels (41, 42) attached to a fuselage by suspension dampers each comprising a hollow piston (11) having a piston head (13) axially slidable in a cylinder (12) filled with hydraulic fluid, a compression fluid passageway (19) in the piston head through which hydraulic fluid is metered during compression of the damper as the wheels contact a landing surface, and an extension fluid passageway (21) through which hydraulic fluid flows during extension of the damper as the helicopter lifts from the landing surface, characterised by selectively operable valve means (23) adapted to close said extension fluid passageway (21) when said helicopter is at rest on an unstable platform to reduce instability of the helicopter by preventing extension of the damper whilst permitting further compression thereof.

Fig.1.

0122731

1/3

Fig.2.

*Fig. 3.*

*Fig. 4.*

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | GB-A-1 013 821 (DOWTY ROTOL) * Page 1, lines 41-62; page 2, lines 19-66; figure 1 * | 1,2,5 | B 64 C 25/60 |
| Y | GB-A- 768 698 (BRITISH MESSIER) * Page 1, lines 11-15; page 2, lines 80-130; figure 3 * | 1,2 | |
| A | FR-A- 985 519 (MORANE-SAULNIER) * Page 2, lines 10-39; figures 1-2 * | 1,5 | |

| TECHNICAL FIELDS SEARCHED (Int. Cl. 3) |
|---|
| B 64 C F 16 F |

The present search report has been drawn up for all claims

| Place of search | Date of completion of the search | Examiner |
|---|---|---|
| THE HAGUE | 11-07-1984 | ZERI A. |